# EUROPÄISCHE PATENTANMELDUNG

(11) **EP 1 983 239 A1**
(43) Veröffentlichungstag der Anmeldung: **22.10.2008**
(21) Anmeldenummer: 08007458.6
(22) Anmeldetag: 16.04.2008
(51) Int. Cl.: F16K 1/44

(54) **Ventil**

(30) Priorität: 16.04.2007 DE 102007017814
(71) Anmelder: Rausch und Pausch GmbH, 95100 Selb (DE)
(72) Erfinder: Wagner, Tobias, 21149 Hamburg (DE)
(74) Vertreter: Klunker . Schmitt-Nilson . Hirsch

(57) **Zusammenfassung**

Ein elektromagnetisches 3-Wege-Proporationalventil umfasst eine erste Fluidkammer (10) mit radialem Tankanschluss (T) und eine zweite Fluidkammer (12) mit Verbraucheranschluss (A) und Pumpenanschluss (P), der normalerweise durch ein Rückschlagventil (14) geschlossen ist. In der ersten Fluidkammer (10) ist ein Kolben (5) axial verschieblich verlagert, um mit seiner stirnseitigen Dichtfläche (6) eine Öffnung (11) zur zweiten Fluidkammer (12) zu verschließen. Auf dem Kolben (5) ist ein Steuerschieber (7) verschieblich gelagert. Der Steuerschieber (7) ist in Richtung auf die Öffnung (11) mittels einer Steuerfeder (8) vorgespannt. Bei axialer Verlagerung des Kolbens (8) verschließt der Steuerschieber (7) nach und nach den Tankanschluss (T) nach Art eines Schieberventils in einer ersten Steuerungsphase, fährt dann gegen einen Dichtsitz (17) im Ventilgehäuse (1) und reduziert in dieser zweiten Steuerungsphase den Durchfluss bis gegen Null. Bei weiterer axialer Verlagerung des Kolbens (5) stößt dieser in einer dritten Steuerungsphase gegen einen Stößel (15) und öffnet damit das Rückschlagventil (14), wobei gleichzeitig die Öffnung (11) nach Art eines Sitzventils geschlossen wird. Es ergeben sich zwei Regelbereiche in der ersten und zweiten Steuerungsphase. Der Pumpenanschluss (P) wird erst in der dritten Steuerungsphase geöffnet, wenn der Tankanschluss (T) bereits zuverlässig geschlossen ist.

## Beschreibung

Die Erfindung betrifft ein Ventil, insbesondere ein mittels eines Elektromagneten steuerbares Hydraulikventil, wie es beispielsweise in Steuerungen bei automatischen Cabrio-Verdeckabläufen eingesetzt wird.

Zur Steuerung der Aktuatoren in hydraulisch betriebenen Cabrio-Verdecken werden 3/2-Magnetventile eingesetzt, die einen Pumpenanschluss, einen Verbraucheranschluss und einen Tankanschluss besitzen und entweder den Pumpenanschluss mit dem Verbraucheranschluss oder den Verbraucheranschluss mit dem Tankanschluss verbinden, um das Cabrio-Verdeck zu schließen und zu öffnen. Die Bewegungsabläufe werden durch Gewichts- und Kinematikkräfte bestimmt, wobei in bestimmten Positionen eine Bewegung bereits durch das Eigengewicht des Verdecks erfolgt. Dadurch ergeben sich bisweilen unerwünscht hohe Bewegungsgeschwindigkeiten und ein ungebremstes Einfahren in die Anschläge, was zu störenden Geräuschen und Rückprallen führt.

In der WO 2004/036057 A2 wird zur Überwindung dieser Problematik ein Proportionalventil in Form eines kleinbauenden, steuerbaren Magnetventils mit integrierter, regelbarer Drossel vorgeschlagen. Aufgrund der Proportionalcharakteristik dieses Ventils ist es möglich, mittels der regelbaren Drossel ein sanftes und geräuschloses Einfahren des Verdecks in die Endlagen zu erreichen. Das besondere an diesem Ventil, welches auch als 2-Wege-Ventil realisierbar ist und beispielsweise lediglich einen Verbraucheranschluss mit einem Tankanschluss verbindet, besteht darin, dass ein Schieber, an dessen einem axialen Ende in herkömmlicher Weise ein Dichtkörper zum Verschließen einer als Dichtsitz ausgebildeten axialen Fluideintrittsöffnung vorgesehen ist, gleichzeitig dazu dient, radiale, zum Tankanschluss führende Fluidaustrittsöffnungen zu verschließen. In einer ersten Position des Schiebers, in der der Schieber nicht betätigt ist und mittels einer Schraubenfeder in eine Ausgangsposition gedrückt ist, sind sowohl der axiale Dichtsitz als auch die radialen Fluidaustrittsöffnungen zum Tank geöffnet. In einem ersten Hubabschnitt des Schiebers, über den der Schieber mit seiner äußeren Umfangsoberfläche die Fluidaustrittsöffnungen zunächst teilweise und schließlich vollständig nach Art eines Schieberventils verschließt, in der das Sitzventil aber noch vollständig offen ist, lassen sich Drosselpositionen variabel einstellen. In diesem ersten Hubabschnitt kann der zum Tank zurückfließende Volumenstrom so gesteuert werden, dass ein sanftes Einfahren des Verdecks in die Anschläge realisierbar ist. Über den restlichen, zweiten Hubabschnitt des Schiebers wird der Schieber weiter vorgeschoben, bis er mit dem Dichtkörper an seinem axialen Ende den axialen Dichtsitz verschließt. Dadurch werden Leckageströme gestoppt, die am Ende des ersten Hubabschnitts, das heißt bei geschlossenen radialen Fluidaustrittsöffnungen, noch verbleiben.

Wird ein solches 2-Wege-Ventil in einem 3-Wege-Ventil realisiert, so ragt bei dem 3-Wege-Ventil ein Stößel in den axialen Dichtsitz hinein. Dieser Stößel wird beim Verschließen des Dichtsitzes mittels des Schiebers aus dem Dichtsitz gedrängt und öffnet dabei den Pumpenanschluss, welcher normalerweise durch ein Rückschlagventil geschlossen ist, indem mittels des Stößels der Dichtkörper des Rückschlagventils seinerseits aus seinem Dichtsitz gedrückt wird. In dieser Position ist dann eine Verbindung zwischen dem Pumpenanschluss und dem Verbraucheranschluss geschaffen, während die Verbindung zwischen dem Verbraucheranschluss und dem Tankanschluss geschlossen ist.

Das in der WO 2004/036057 A2 beschriebene Proportionalventil weist im Schieberbetrieb, das heißt im ersten Hubabschnitt des Schiebers, einen Regelbereich auf. Die untere Grenze des Schieberregelbereichs ist durch die erwähnten Leckageströme abhängig vom Systemdruck vorgegeben und ergibt sich aufgrund der Toleranzen zwischen dem Schieber und dem Gehäuse, in welchem der Schieber geführt ist. Durch eine höhere Fertigungsgenauigkeit und entsprechend höhere Fertigungskosten kann diese untere Grenze abgesenkt werden. Für preiswerte Ventile stellt sich diese Alternative jedoch nicht.

Unterhalb des Schieberregelbereichs wird eine Regelung des Volumenstroms über den Dichtsitz des üblicherweise als Kugel ausgebildeten Dichtkörpers, die vorne am Schieber angeordnet ist, erreicht. Für den Einsatz im Cabrio-Verdecksystem wird allerdings nur dieser untere Regelbereich genutzt, da der Volumenstrom des Gesamtsystems auf verschiedene Einzelkreise aufgeteilt wird. Darüberhinaus neigt das in der WO 2004/036057 beschriebene Proportional-Ventil im Sitzregelbereich, d.h. im zweiten Hubabschnitt, dazu, die Verbindung zwischen dem Pumpenanschluss und dem Verbraucheranschluss bereits zu öffnen, wenn die Verbindung vom Verbraucheranschluss zum Tankanschluss noch nicht oder nicht vollständig geschlossen ist. Dies kann im Grenzfall zu unkontrollierten Bewegungen von angetriebenen Dachbauteilen bis hin zu Kollisionen führen.

Aufgabe der vorliegenden Erfindung ist es daher, ein Ventil, insbesondere für Hydrauliksysteme von automatischen Cabrio-Verdecks, vorzuschlagen, welches als Proportionalventil eingesetzt werden kann und eine Regelung kleiner Volumenströme bis gegen 0 ermöglicht. Bei Realisierung eines solchen Ventils in einem 3-Wege-Ventil soll dabei sichergestellt sein, dass eine Verbindung des Verbraucheranschlusses zum Pumpenanschluss erst bei vollständig geschlossener Verbindung zwischen Verbraucheranschluss und Tankanschluss geöffnet wird.

Diese Aufgabe wird erfindungsgemäß durch ein Ventil mit den Merkmalen des Anspruchs 1 gelöst. In davon abhängigen Ansprüchen sind vorteilhafte Ausgestaltungen und Weiterbildungen der Erfindung angegeben.

Das erfindungsgemäße Ventil besitzt eine Fluidkammer mit einer axialen Fluideintrittsöffnung, die vorzugsweise als ein (erster) Dichtsitz ausgebildet ist, und mit mindestens einer Fluidaustrittsöffnung, die wie im Stand der Technik radial an der Fluidkammer ausgebildet ist. In der Fluidkammer ist ein Kolben axial gegen die axiale Fluid-eintrittsöffnung verschieblich und besitzt dazu vorzugsweise eine mit dem ersten Dichtsitz nach Art eines Sitzventils zusammenwirkende (erste) Dichtfläche. Erfindungsgemäß ist ein entlang dem Kolben verschieblicher Steuerschieber vorgesehen. Der Steuerschieber besitzt eine (zweite) Dichtfläche, die mit einem (zweiten) Dichtsitz, der die axiale Fluideintrittsöffnfung radial umschließt, nach Art eines Sitzventils zusammenwirkt. Der entlang dem Kolben verschiebliche Steuerschieber ist in Richtung auf den (zweiten) Dichtsitz vorgespannt und wirkt mit der radialen Fluidaustrittsöffnung nach Art eines Schieberventils zusammen.

Kolben und Steuerschieber sind so dimensioniert und zueinander angeordnet, dass bei einer axialen Verschiebung des Kolbens und des mit dem Kolben mitbewegten Steuerschiebers zunächst die Dichtfläche des Steuerschiebers gegen den zugehörigen Dichtsitz fährt, während das freie axiale Ende des Kolbens noch von seiner axialen Endlage entfernt ist. In dieser Stellung ist der Durchfluss durch die Fluidkammer bereits gesperrt. Etwaige verbleibende Leckageströme zwischen dem Steuerschieber und dem Kolben lassen sich vorteilhafter Weise mittels eines Dichtelements eliminieren. Aber auch ohne ein solches Dichtelement sind die Leckageströme bereits deutlich geringer als bei den bekannten Ventilen, weil sich der Dichtungsspalt zwischen Kolben und Schieber über einen deutlich kleineren Umfang erstreckt als der herkömmliche Dichtungsspalt zwischen Schieber und Gehäuse. Verlagert man den Kolben weiter in Richtung auf die axiale Fluideintrittsöffnung, so wird der Steuerschieber von seinem zugehörigen Dichtsitz zurückgehalten und entgegen seiner Vorspannung relativ zum Kolben solange zurückgeschoben, bis der Kolben seine axiale Endlage erreicht hat. In dieser Endlage kann der Kolben beispielsweise ein in der Fluideintrittsöffnung befindliches Ventilelement, etwa den eingangs erwähnten Stößel des bekannten 3/2-Ventils, in eine andere Position drängen und/oder, soweit das axiale Ende des Kolbens und die Fluideintrittsöffnung als Sitzdichtung ausgebildet sind, die Fluideintrittsöffnung verschließen. Danach sind auch letzte geringfügige Leckageströme zuverlässig gestoppt.

Der eigentliche Regelbereich des Ventils liegt somit in dem Hubabschnitt des Kolbens, der mit dem Anschlagen der Dichtfläche des Schiebers gegen den zugehörigen Dichtsitz der Fluidkammer endet. Durch eine genaue Steuerung der Kolbenbewegung lassen sich sehr kleine Volumenströme bis gegen Null regeln. Der Hubabschnitt ist umso länger und die Volumenstromregelung umso exakter steuerbar, je konischer Dichtsitz und Dichtfläche des Steuerschiebers ausgebildet werden. Aber auch andere Formen des Dichtsitzes und der Dichtfläche des Steuerschiebers, beispielsweise eine ballige oder flache Gestalt, sind möglich.

Wie erwähnt wirkt der Steuerschieber mit den radialen Fluidaustrittsöffnungen nach Art eines Steuerschieberventils zusammen. Dadurch ergeben sich insgesamt drei für die Ventilsteuerung bedeutsame Hubabschnitte: ein erster Hubabschnitt, in welchem der Steuerschieber mittels des Kolbens die radialen Fluidaustrittsöffnungen nach und nach verdeckt; ein zweiter Hubabschnitt, in welchem der Steuerschieber mittels des Kolbens bei verdeckten radialen Fluidaustrittsöffnungen weiter bis gegen den zugehörigen Dichtsitz verlagert wird; und ein dritter Hubabschnitt, in dem lediglich noch der Kolben bis in seine Endlage weiter axial verlagert wird, in der er vorzugsweise mit seiner Dichtfläche auf ihrem zugehörigen Dichtsitz aufsitzt und die Fluideintrittsöffnung zuverlässig verschließt, während der Steuerschieber in seiner bereits erreichten Position zurückgehalten wird. Im ersten Hubabschnitt können große Volumenströme geregelt werden, während im zweiten Hubabschnitt sehr kleine Volumenströme bis gegen Null regelbar sind.

Das erfindungsgemäße Ventil lässt sich somit vorteilhaft als Proportionalventil einsetzen. Zur Verlagerung des Kolbens innerhalb der Fluidkammer dient vorzugsweise ein elektromagnetischer Antrieb. Durch geeignete Dimensionierung des elektromagnetischen Antriebs lässt sich die gewünschte Proportionalcharakteristik erzielen. Die Rückstellung des Ankers des Elektromagneten wird dabei vorteilhafter Weise durch Federkraft unterstützt.

Auch die axiale Vorspannung des Schiebers in Richtung auf die axiale Fluideintrittsöffnung wird vorzugsweise mittels einer Feder realisiert, die sich in der Fluidkammer abstützen kann, die sich aber vorzugsweise am Kolben selbst abstützt.

Besonders vorteilhaft ist die Erfindung aber für die Realisierung eines 3-Wege-Ventils der eingangs beschriebenen Art, bei der die Fluideintrittsöffnung die bereits erwähnte Fluidkammer mit einer weiteren Fluidkammer verbindet, welche ihrerseits eine üblicherweise mit der Pumpe verbundene Fluideintrittsöffnung ("Pumpenanschluss") und eine mit einem Verbraucher verbundene weitere Fluidein-/-austrittsöffnung ("Verbraucheranschluss") besitzt. Ein Rückschlagventil im Pumpenanschluss sorgt dafür, dass der Pumpenanschluss normalerweise geschlossen ist. Ein die weitere Fluidkammer durchsetzender Stößel erstreckt sich derart durch die weitere Fluidkammer, dass der Stößel mit einem Ende das Rückschlagventil aus seiner gesperrten Position in eine geöffnete Stellung drückt, wenn der Kolben in seiner axialen Endlage mittels seines axialen Endes das entsprechend andere Ende des Stößels axial verlagert.

Der Kolben verdrängt den Stößel erst im dritten Hubabschnitt aus der Fluideintrittsöffnung, wenn also der Steuerschieberdichtsitz bereits geschlossen ist. Somit wird sichergestellt, dass eine Verbindung des Verbraucheranschlusses zum Pumpenanschluss erst dann hergestellt wird, wenn die Verbindung des Verbraucheranschlusses zum Tankanschluss geschlossen ist. Am Ende seiner Bewegung verschließt der Kolben die Verbindung zwischen Verbraucher und Tank vorzugsweise zusätzlich mittels des Kolbendichtsitzes.

Nachfolgend wird die Erfindung beispielhaft anhand der begleitenden Zeichnungen beschrieben. Darin zeigen:
- Figur 1: ein erfindungsgemäßes 3-Wege-Magnetventil mit Federrückstellung in einer ersten Endstellung schematisch im Querschnitt,
- Figur 2: das 3-Wege-Ventil aus Figur 1 in einer zweiten Endstellung,
- Figuren 3A bis 3F: einen Ausschnitt des 3-Wege-Ventils aus Figuren 1 und 2 zur Verdeutlichung unterschiedlicher Ventilstellungen,
- Figur 4: eine Kraft-Weg-Kennlinie des Ventilkolbens des 3-Wege-Ventils der Figuren 1 bis 3 und
- Figuren 5A bis 5C: alternative Dichtsitzgestaltungen.

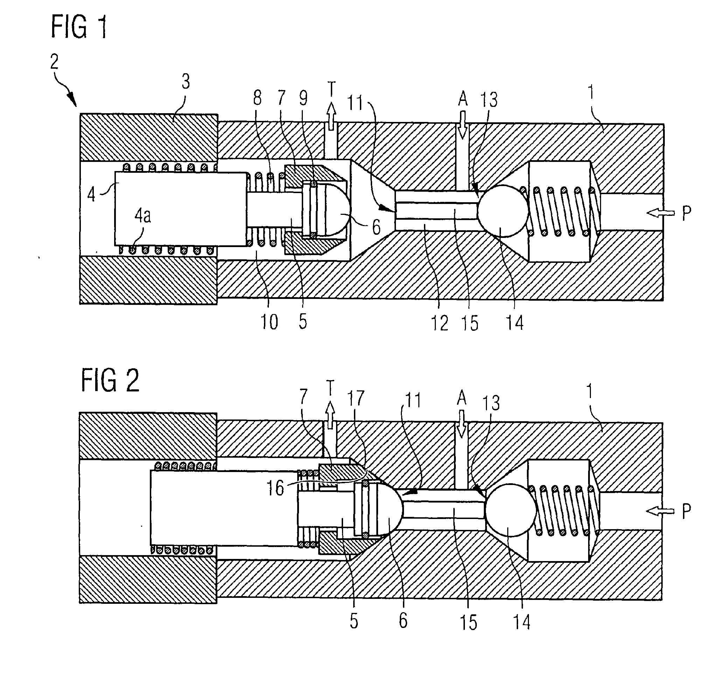

Figur 1 zeigt ein 3-Wege-Ventil mit einem Ventilgehäuse 1 und einem federrückgestellten Magnetantrieb 2 zur elektromagnetischen Betätigung der in dem Ventilgehäuse 1 verschieblich gelagerten Bauelemente. Die Darstellung ist rein schematisch. Der Magnetantrieb 2 umfasst eine Spule 3, einen mittels der Spule 3 axial verlagerbaren Spulenanker 4 und eine Rückstellfeder 4a, die entgegen der Magnetkraft der Magnetspule 3 den Spulenanker 4 in eine Ausgangsposition drängt. Mit dem Spulenanker 4 in axialer Richtung fest gekoppelt ist ein Kolben 5, der an seinem stirnseitigen Ende eine erste, halbkugelförmige Dichtfläche 6 besitzt. Ein Steuerschieber 7 ist auf dem Kolben 5 verschieblich gelagert. Er wird durch eine Steuerfeder 8 in Richtung des stirnseitigen Endes des Kolbens 5 gedrängt. Dabei stützt sich die Steuerfeder 8 auf einem Ansatz des Spulenankers 4 ab. Der Steuerschieber 7 stützt sich seinerseits gegen einen Ansatz des Kolbens 5. Der Steuerschieber 7 ist somit entgegen der Vorspannkraft der Steuerfeder 8 relativ zum Kolben 5 entlang dessen Längsachse verschieblich. Dabei ist der Steuerschieber 7 mittels eines Dichtelements 9, welches hier als einfache Ringdichtung dargestellt ist, relativ zum Kolben abgedichtet, so dass Hydraulikfluid nicht zwischen dem Steuerschieber 7 und dem Kolben 5 hindurchfließen kann.

Der Kolben 5 und der Steuerschieber 7 befinden sich in einer ersten Fluidkammer 10 des Ventilgehäuses 1. Das Ventilgehäuse 1 besitzt drei Anschlüsse P (Pumpenanschluss), A (Verbraucheranschluss) und T (Tankanschluss). Der Tankanschluss T schließt sich hier radial an die erste Fluidkammer 10 an und kann auch durch mehrere Öffnungen gebildet sein, die sich über den Umfang verteilen und/oder axial zueinander versetzt sein und/oder unterschiedlichen Querschnitt haben können. Eine Fluideintrittsöffnung 11 verbindet die erste Fluidkammer 10 mit einer zweiten Fluidkammer 12. Gegenüberliegend zur Fluideintrittsöffnung 11, welche bezogen auf die zweite Fluidkammer 12 eine Fluidaustrittsöffnung darstellt, besitzt die zweite Fluidkammer 12 ihrerseits eine Fluideintrittsöffnung 13, welche durch ein Rückschlagventil 14 normalerweise geschlossen ist. Darüber hinaus zweigt von der zweiten Fluidkammer 12 radial der Verbraucheranschluss A ab. In der Fluidkammer 12 ist ein Stößel axial verschieblich angeordnet. Die Art und Weise der verschieblichen Lagerung des Stößels 15 ist der Anschaulichkeit halber nicht im Detail dargestellt.

In dem in Figur 1 dargestellten Zustand ist der Magnetantrieb 2 unbestromt und das Ventil stellt eine Verbindung zwischen dem Verbraucheranschluss A und dem Tankanschluss T her, während die Verbindung zwischen dem Pumpenanschluss P und dem Verbraucheranschluss A durch das Rückschlagventil 14 geschlossen ist.

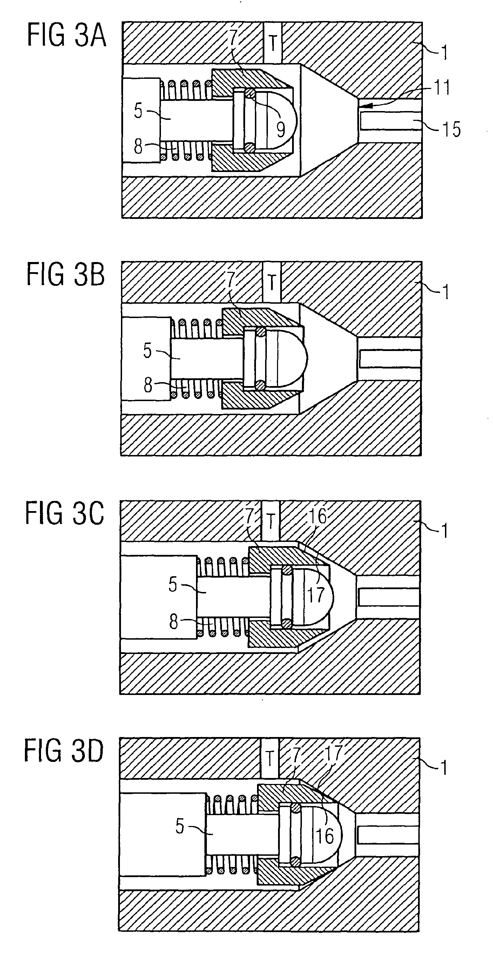

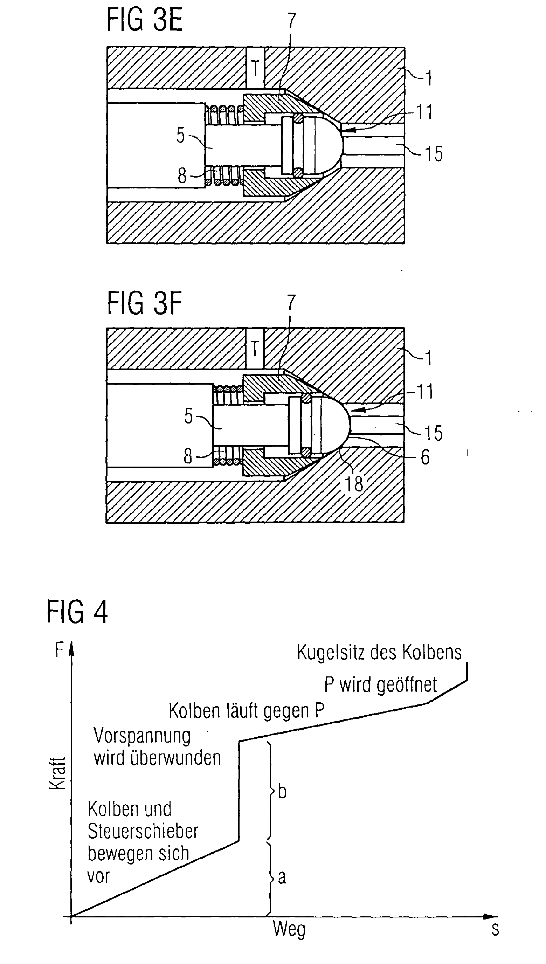

Figur 2 zeigt dagegen den vollbestromten Zustand des Ventils, bei dem das Rückschlagventil 14 mittels des Stößels 15 aus der Fluideintrittsöffnung 13 herausgehoben ist, so dass eine Verbindung zwischen Pumpenanschluss P und Verbraucheranschluss A hergestellt ist. Gleichzeitig ist die Verbindung zwischen Verbraucheranschluss A und Tankanschluss T geschlossen, weil einerseits die Dichtfläche 6 des Kolbens 5 die Fluideintrittsöffnung 11 zur ersten Fluidkammer 10 abdichtet und weil insbesondere eine Dichtfläche 16 des Steuerschiebers 7 einen die Fluideintrittsöffnung 11 konzentrisch umgebenden Dichtsitz 17 abdichtet. Die einzelnen Phasen werden nachfolgend in bezug auf die Figuren 3A bis 3F anhand der Bewegung des Kolbens 5 genauer erläutert, wobei die Figuren 3A bis 3F eine Ausschnittsvergrößerung des Ventils nach Figuren 1 und 2 zeigen.

Figur 3A zeigt dieselbe Situation wie Figur 1, bei der sich der Kolben 5 im unbestromten Zustand des Ventils in seiner äußerst linken Ausgangsstellung befindet. Die Verbindung zwischen Fluideintrittsöffnung 11 und Tankanschluss T ist offen. Es beginnt der die erste Steuerungsphase definierende erste Hubabschnitt durch teilweise Bestromung der Magnetspule. Der Kolben 5 wird dadurch nach rechts verschoben, und mit ihm der Steuerschieber 7, welcher durch die Kraft der Feder 8 in seiner relativen Lage zum Kolben 5 zunächst fixiert bleibt. Dabei verschließt der Steuerschieber 7 den Tankanschluss T zunehmend und drosselt den Durchfluss zum Tank entsprechend (Figur 3B). Sobald der Steuerschieber 7 mit seiner radialen Außenfläche den Tankanschluss T vollständig überdeckt, ist der erste Hubabschnitt des Kolbens 5 und damit die erste Steuerungsphase abgeschlossen. Dann fließt nur noch ein definierter Reststrom, der vom anliegenden Druck abhängt, durch den Spalt zwischen dem Steuerschieber 7 und dem Ventilgehäuse 1 zum Tankanschluss T.

Figur 3C zeigt den Kolben 5 in einer weiter nach rechts verlagerten Position, bei der der Durchflussquerschnitt zwischen Steuerschieber 7 und Ventilgehäuse 1 gegenüber der Situation am Ende des ersten Hubabschnitts verringert ist. Dieser verringerte Querschnitt ergibt sich dadurch, dass sich der Steuerschieber 7 mit seiner konischen, hier kegelförmig ausgebildeten Stirnfläche 16 der Ventilgehäusewandung annähert, bis sie - wie in Figur 3D gezeigt - daran anliegt.

Die Phase des sich verringernden Durchtrittsquerschnitts zwischen Steuerschieber 7 und Ventilgehäuse 1 bis hin zur Anlage definiert einen zweiten Hubabschnitt bzw. eine zweite Steuerungsphase zur Drosselung des Volumenstroms zum Tankanschluss T. Die Drosselung über diesen zweiten Hubabschnitt lässt sich auf sehr kleine Volumenströme bis gegen Null regeln, indem der Steuerschieber 7 am Ende dieses zweiten Hubabschnitts mit seiner Stirnfläche 16 im Ventilgehäuse 1 zur Anlage kommt, ohne dass relevante Leckageströme verbleiben (Figur 3D). Dabei bildet die Stirnfläche 16 eine Dichtfläche und der entsprechende Wandungsbereich 17 des Ventilgehäuse 1 einen zugehörigen Dichtsitz, wobei Dichtfläche 16 und Dichtsitz 17 nach Art eines Sitzventils zusammenwirken.

Bei weiterer Verlagerung des Kolbens 5 in axialer Richtung auf die Fluideintrittsöffnung 11 stößt der Kolben 7 mit seinem stirnseitigen Ende irgendwann gegen den Stößel 15 und schiebt diesen gegen das Rückschlagventil 14. Diese Situation ist in Figur 3E gezeigt, in der das Rückschlagventil jedoch nicht dargestellt ist. Das Rückschlagventil ist dabei noch geschlossen. Dieser Moment markiert den Beginn eines dritten Hubabschnitts, der eine dritte Steuerungsphase definiert. Figur 3E ist zu entnehmen, dass sich der Kolben 5 zum Erreichen dieser dritten Steuerungsphase durch den Steuerschieber 7 hindurchschiebt, während der Steuerschieber 7 unter Aufrechterhaltung des geschlossenen Dichtsitzes 16, 17 im Ventilgehäuse 1 zurückgehalten wird. Dabei wird die Steuerfeder 8 komprimiert, die dazu dient, den Steuerschieber 7 bei umgekehrter Kolbenbewegungsrichtung wieder in seine Ausgangsposition zurückzubewegen. Im Hubbereich zwischen den in Figuren 3D und 3E gezeigten Positionen sind somit sowohl die Verbindung zwischen Verbraucheranschluss A und Tankanschluss T als auch die Verbindung zwischen Pumpenanschluss P und Verbraucheranschluss A geschlossen. In dieser Situation ist die Dichtung 9 von Bedeutung, welche sicherstellt, dass Hydraulikfluid nicht zwischen dem Steuerschieber 7 und dem Kolben 5 hindurch zum Tankanschluss T gelangt.

In dem dritten Hubabschnitt wird der Kolben 5 weiter vorbewegt, bis er mit seiner Dichtfläche 6 die Fluideintrittsöffnung 11 verschließt. Dabei wird der Stößel 15 axial verlagert, so dass der Ventilkörper des Rückschlagventils 14 aus seinem Ventilsitz gehoben wird. Dieser Moment markiert das Ende der dritten Steuerungsphase, an dem die Verbindung zwischen Pumpenanschluss P und Verbraucheranschluss A vollständig geöffnet ist.

Die Fluideintrittsöffnung 11 ist hier als Dichtsitz ausgebildet, der mit der Dichtfläche 6 des Kolbens 5 nach Art eines Sitzventils zusammenwirkt. Eine vollständige und zuverlässige Abdichtung zwischen Pumpe und Tank wird dadurch gewährleistet. Sofern allerdings eine zuverlässige Abdichtung bereits durch die Sitzdichtung 16, 17 zwischen Steuerschieber 7 und Ventilgehäuse 1 erreicht wird, muss das axiale Ende des Kolbens 5 nicht notwendigerweise als Dichtfläche 6 ausgebildet sein. Es empfiehlt sich jedoch, zumindest einen Endanschlag für den Kolben 5 vorzusehen, um definierte Ventilendlagen zu realisieren.

Während des Hubabschnitts bis zum Ende der dritten Steuerungsphase wird die Steuerfeder 8 zunehmend komprimiert.

Die ventilinternen Kraftverhältnisse lassen sich einfach über die Federkennlinie der Steuerfeder 8 abstimmen. Dies ist in Figur 4 schematisch dargestellt. Auf der Ordinate ist die Kraft F aufgetragen, die mittels des Magnetantriebs 2 aufzubringen ist, um gegen die Federkraft der Steuerfeder 8 und den Pumpendruck im Pumpenanschluss P den Kolben 5 zu verlagern. Bis zum Ende der zweiten Steuerphase, an dem der Steuerschieber 7 mit seiner Dichtfläche 16 am Dichtsitz 17 des Ventilgehäuses 1 zur Anlage kommt, nimmt die Kraft linear zu. Dann erhöht sich die Kraft um dasjenige Maß b, welches erforderlich ist, die Vorspannung der Steuerfeder 8 zu überwinden. Dabei ist es zur Sicherstellung der Sitzregelung wichtig, dass die Kraft a bis zum Erreichen des Endes der zweiten Steuerphase kleiner ist als die zu überwindende Vorspannkraft b. Nach Überwinden der Vorspannkraft läuft der Kolben 5 weiter gegen den Stößel 15, bis der Stößel 15 am Rückschlagventil 14 zur Anlage kommt. In diesem Hubabschnitt nimmt die Kraft F wieder linear zu. Anschließend wird der Ventilkörper des Rückschlagventils 14 aus seinem Dichtsitz gehoben, wobei die Federkraft des Rückschlagventils 14 zu überwinden ist. Dadurch verläuft die Kraftkennlinie in diesem Hubabschnitt etwas steiler, bis die Dichtfläche 6 des Kolbens 5 im Dichtsitz 18 aufsitzt.

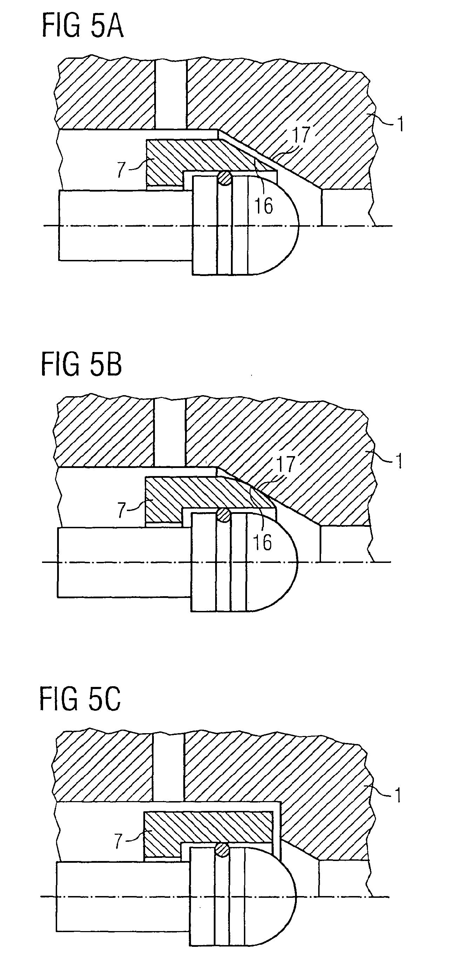

Figuren 5A bis 5C zeigen Varianten der Sitzgestaltung des Steuerschiebers 7 im Ventilgehäuse 1. Figur 5A zeigt einen Sitz, bei dem sowohl die Dichtfläche 16 als auch der Dichtsitz 17 mit kegelförmigem Konus ausgebildet sind. In Figur 5B ist die Dichtfläche 16 ballig ausgebildet. Figur 5C zeigt einen Flachsitz.

## Patentansprüche

1. Ventil, umfassend eine Fluidkammer (10) mit einer axialen Fluideintrittsöffnung (11) und einer Fluidaustrittsöffnung (T) und mit einem in der Fluidkammer (10) axial in Richtung auf die Fluideintrittsöffnung (11) verschieblichen Kolben (5), wobei die Fluidaustrittsöffnung (T) radial zum Kolben (5) angeordnet ist, **gekennzeichnet durch** einen die Fluideintrittsöffnung (11) radial umschließenden Dichtsitz (17) und einen entlang dem Kolben (5) verschieblichen Steuerschieber (7), der eine mit dem Dichtsitz (17) nach Art eines Sitzventils zusammenwirkende Dichtfläche (16) aufweist und in Richtung auf den Dichtsitz (17) vorgespannt ist und der mit der radialen Fluidaustrittsöffnung (T) nach Art eines Schieberventils zusammenwirkt.

2. Ventil nach Anspruch 1, **dadurch gekennzeichnet, dass** die Fluideintrittsöffnung (11) die Fluidkammer (10) mit einer weiteren Fluidkammer (12) verbindet, die ihrerseits eine durch Rückschlagventil (14) normalerweise geschlossene Fluideintrittsöffnung (13) besitzt und in der ein Stößel (15) derart angeordnet ist, dass bei axialer Verlagerung des Kolbens (5) in Richtung auf die Fluideintrittsöffnung (11), bei durch das Zusammenwirken der Dichtfläche (16) mit dem Dichtsitz (17) bereits geschlossenem Sitzventil (16, 17), der Kolben (5) mit dem Stößel (15) in Kontakt gelangen und mittels des Stößels (15) das Rückschlagventil (14) in eine geöffnete Stellung drängen kann.

3. Ventil nach einem der Ansprüche 1 bis 2, **dadurch gekennzeichnet, dass** es als Proportionalventil ausgebildet ist.

4. Ventil nach einem der Ansprüche 1 bis 3, **dadurch gekennzeichnet, dass** es elektromagnetisch (2) betätigt ist.

5. Ventil nach einem der Ansprüche 1 bis 4, **dadurch gekennzeichnet, dass** es federrückgestellt (4a) ist.

6. Verfahren nach einem der Ansprüche 1 bis 5, **gekennzeichnet durch** ein Federelement (8) zum Vorspannen des Steuerschiebers (7) in Richtung auf den Dichtsitz (17).

7. Ventil nach Anspruch 6, **dadurch gekennzeichnet, dass** sich das Federelement (8) am Kolben (5) abstützt.

8. Ventil nach einem der Ansprüche 1 bis 7, **dadurch gekennzeichnet, dass** der Steuerschieber (7) mittels eines Dichtelements (9) gegenüber dem Kolben (5) abgedichtet ist.

9. Ventil nach einem der Ansprüche 1 bis 8, **dadurch gekennzeichnet, dass** der durch die Dichtfläche (16) und den Dichtsitz (17) gebildete Dichtsitz als Flachsitz ausgebildet ist.

10. Ventil nach einem der Ansprüche 1 bis 8, **dadurch gekennzeichnet, dass** der durch die Dichtfläche (16) und den Dichtsitz (17) gebildete Dichtsitz als Konus ausgebildet ist.

11. Ventil nach Anspruch 10, **dadurch gekennzeichnet, dass** die Dichtfläche (16) kegelig ausgebildet ist.

12. Ventil nach Anspruch 11, **dadurch gekennzeichnet, dass** die kegelig ausgebildete Dichtfläche (16) spitzwinkliger ist als der Konus des Dichtsitzes (17).

13. Ventil nach Anspruch 10, **dadurch gekennzeichnet, dass** die Dichtfläche (16) ballig ausgebildet ist.

14. Ventil nach einem der Ansprüche 1 bis 13, **dadurch gekennzeichnet, dass** das axiale Ende des Kolbens (5) als mit einem weiteren Dichtsitz (18) nach Art eines Dichtsitzes zusammenwirkende weitere Dichtfläche (6) zum Abdichten der Fluideintrittsöffnung (11) ausgebildet ist.

15. Hydrauliksystem eines Cabrio-Verdecks, umfassend mindestens ein Ventil nach einem der Ansprüche 1 bis 14.

16. Verwendung eines Ventils nach einem der Ansprüche 1 bis 14 in einem Hydrauliksystem eines Cabrio-Verdecks.
